# EUROPEAN PATENT APPLICATION

(11) **EP 4 518 550 A1**
(43) Date of publication of application: **05.03.2025**
(21) Application number: 22939103.2
(22) Date of filing: 28.04.2022
(51) Int. Cl.: H04W 74/08

(54) **RANDOM ACCESS RESOURCE CONFIGURATION METHOD, RANDOM ACCESS METHOD, APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/089942
(87) International publication number: WO 2023/206251

(57) **Abstract**

The present application belongs to the field of communications. Disclosed are a random access resource configuration method, a random access method, an apparatus, and a storage medium. The method comprises: a first-type terminal receiving a first random access resource configured by a c for the first-type terminal (201), the first random access resource being different from a second random access resource of a second-type terminal and a third random access resource of a third-type terminal, and the terminal capability of the second-type terminal and the terminal capability of the third-type terminal being both greater than the terminal capability of the first-type terminal. The method is used for supporting the first-type terminal in reporting the terminal type thereof.

## Description

### TECHNICAL FIELD

The present disclosure relates to the field of communications, and in particular to a random access resource configuration method, a random access method, an apparatus and a storage medium.

### BACKGROUND

In a Long Term Evolution (LTE) system, in order to support Internet of Things services, there are proposed two major technologies, Machine-Type Communication (MTC) and Narrow Band-Internet of Things (NB-IoT). These two technologies are mainly aimed at low-rate and high-latency application scenarios, such as meter reading and environmental monitoring.

The NB-IoT technology supports a maximum rate of several hundred KBs, and the MTC technology supports a maximum rate of several MBs. With the development of the IoT services, there are emerged some services, such as smart home, wearable devices, and industrial sensor measurement, which usually require a rate of tens to 100 MBs. The NB-IoT and MTC technologies can no longer meet the requirements of such services.

Therefore, a new type of user terminal (User Equipment, UE) is proposed in the 5G new radio (NR) to cover the needs of IoT devices supporting these services. In the R17 version of the third generation partnership project (3GPP), a terminal type of Reduced Capability UE (RedCap UE) is introduced, and an early indication mechanism is introduced for RedCap UE, which is a mechanism for reporting UE type and UE capability in a random access procedure.

### SUMMARY

The embodiments of the present disclosure provide a random access resource configuration method, a random access method, an apparatus and a storage medium. The technical solutions are as follows.

According to an aspect of embodiments of the present disclosure, a random access resource configuration method is provided, the method being performed by a first-type terminal, and the method including:
receiving a first random access resource configured by a network device for the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access method is provided, the method being performed by a first-type terminal, and the method including:
sending a first message in a random access process using a first random access resource, where the first random access resource is a random access resource corresponding to the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access resource configuration method is provided, the method being performed by a network device, and the method including:
sending a first random access resource to a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access method is provided, the method being performed by a network device, and the method including:
receiving a first message in a random access process that is sent by a first-type terminal using a first random access resource, where the first random access resource is a random access resource corresponding to the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access resource configuration apparatus is provided, the apparatus including:
a first receiving module, configured to receive a first random access resource configured by a network device for a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access apparatus is provided, the apparatus including:
a first sending module, configured to send a first message in a random access process using a first random access resource, where the first random access resource is a random access resource corresponding to a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access resource configuration apparatus is provided, the apparatus including:
a second sending module, configured to send a first random access resource to a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a random access apparatus is provided, the apparatus including:
a second receiving module, configured to receive a first message in a random access process that is sent by a first-type terminal using a first random access resource, where the first random access resource is a random access resource corresponding to the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

According to another aspect of embodiments of the present disclosure, a terminal is provided, the terminal including:
a processor; and
a transceiver connected to the processor;
where the processor is configured to execute executable instructions to implement the steps on the terminal side in the random access resource configuration method and the random access method as described in the above aspects.

According to another aspect of embodiments of the present disclosure, a network device is provided, the network device including:
a processor; and
a transceiver connected to the processor;
where the processor is configured to execute executable instructions to implement the steps on the network device side in the random access resource configuration method and the random access method as described in the above aspects.

According to another aspect of embodiments of the present disclosure, a computer readable storage medium is provided, where the computer-readable storage medium stores at least one piece of instruction, at least one program segment, a code set, or an instruction set, and the at least one piece of instruction, the at least one program segment, the code set, or the instruction set is loaded and executed by a processor to implement the steps on the terminal side in the random access resource configuration method and the random access method as described in the above aspects, or to implement the steps on the network device side in the random access resource configuration method and the random access method as described in the above aspects.

According to another aspect of embodiments of the present disclosure, a computer program product (or computer program) is provided, where the computer program product (or computer program) includes computer instructions that are stored in a computer-readable storage medium; a processor of a computer device reads the computer instructions from the computer-readable storage medium, and the processor executes the computer instructions to cause the computer device to perform the steps on the terminal side in the random access resource configuration method and the random access method as described in the above aspects, or to perform the steps on the network device side in the random access resource configuration method and the random access method as described in the above aspects.

According to another aspect of embodiments of the present disclosure, a chip is provided, which includes a programmable logic circuit and/or program instructions, and the chip, when being running, is configured to implement the steps on the terminal side in the random access resource configuration method and the random access method as described in the above aspects, or to implement the steps on the network device side in the random access resource configuration method and the random access method as described in the above aspects.

The technical solutions provided by the embodiments of the present disclosure may have the following beneficial effects.

In the above random access resource configuration method, the network device configures a first random access resource for a first-type terminal. The first random access resource is different from a second random access resource used by a second-type terminal and a third random access resource used by a third-type terminal. The terminal capability of the first-type terminal is different from the terminal capability of the second-type terminal and the terminal capability of the third-type terminal. That is, the network device can configure the exclusive first random access resource for the first-type terminal based on the terminal capability of the first-type terminal, and the first-type terminal can be indicated through the use of the first random access resource.

It is to be understood that the foregoing general description and the following detailed description are illustrative and explanatory only and cannot restrict the present disclosure.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those of ordinary skill in the art, other drawings can be obtained based on these drawings without paying any creative effort.
FIG. 1 is a schematic diagram of a communication system according to an illustrative embodiment;
FIG. 2 is a flow chart of a random access resource configuration method according to an illustrative embodiment;
FIG. 3 is a flow chart of a random access method according to an illustrative embodiment;
FIG. 4 is a flow chart of a random access resource configuration method according to another illustrative embodiment;
FIG. 5 is a flow chart of a random access method according to another illustrative embodiment;
FIG. 6 is a block diagram of a random access resource configuration apparatus according to an illustrative embodiment;
FIG. 7 is a block diagram of a random access apparatus according to an illustrative embodiment;
FIG. 8 is a block diagram of a random access resource configuration apparatus according to another illustrative embodiment;
FIG. 9 is a block diagram of a random access apparatus according to another illustrative embodiment;
FIG. 10 is a structural schematic diagram of a terminal according to an illustrative embodiment; and
FIG. 11 is a structural schematic diagram of a network device according to an illustrative embodiment.

### DETAILED DESCRIPTION

Illustrative embodiments will be described in detail herein, examples of which are shown in the accompanying drawings. When the following description refers to the drawings, the same numbers in different drawings represent the same or similar elements unless otherwise indicated. The embodiments described in the following illustrative embodiments do not represent all embodiments consistent with the present disclosure. Instead, they are merely examples of devices and methods consistent with some aspects of the present disclosure as detailed in the appended claims.

In the LTE system, in order to support the Internet of Things services, two major technologies, MTC and NB-IoT, are proposed. These two technologies are mainly aimed at low-rate and high-latency application scenarios, such as meter reading and environmental monitoring.

The NB-IoT technology supports a maximum rate of several hundred KBs, and the MTC technology supports a maximum rate of several MBs. With the development of the IoT services, there are emerged some services, such as smart home, wearable devices, and industrial sensor measurement, which usually require a rate of tens to 100 MBs. The NB-IoT and MTC technologies can no longer meet the requirements of such services.

Currently, a new type of user equipment (UE) is proposed in the third generation partnership project (3GPP) to meet the needs of IoT devices supporting the above services. In the R17 version of 3GPP, a terminal type of RedCap UE is introduced, and an early indication mechanism is introduced for the RedCap UE, which is a mechanism for reporting a terminal type and terminal capability in the random access process. For example, the terminal indicates the terminal type through Message 1 (Msg. 1), Message A (Msg. A), or Message 3 (Msg. 3) in the random access process.

For 5G New Radio (NR), a terminal type of enhanced Reduced Capability UE (eRedCap UE) is introduced in 3GPP R18. The terminal bandwidth of the eRedCap UE is further reduced compared with RedCap UE. For example, in the random access Frequency Range 1 (FR1), the terminal bandwidth of eRedCap UE is reduced from 20 MHz to 5 MHz. In addition, the terminal data processing time and peak rate of the the eRedCap UE is further reduced compared with the RedCap UE. Therefore, the early indication mechanism of the RedCap UE is not applicable to the eRedCap UE. Therefore, in order to solve the technical problem of reporting the terminal type of the eRedCap UE, the present disclosure provides a random access resource configuration method and a random access method, as illustrated in the following embodiments.

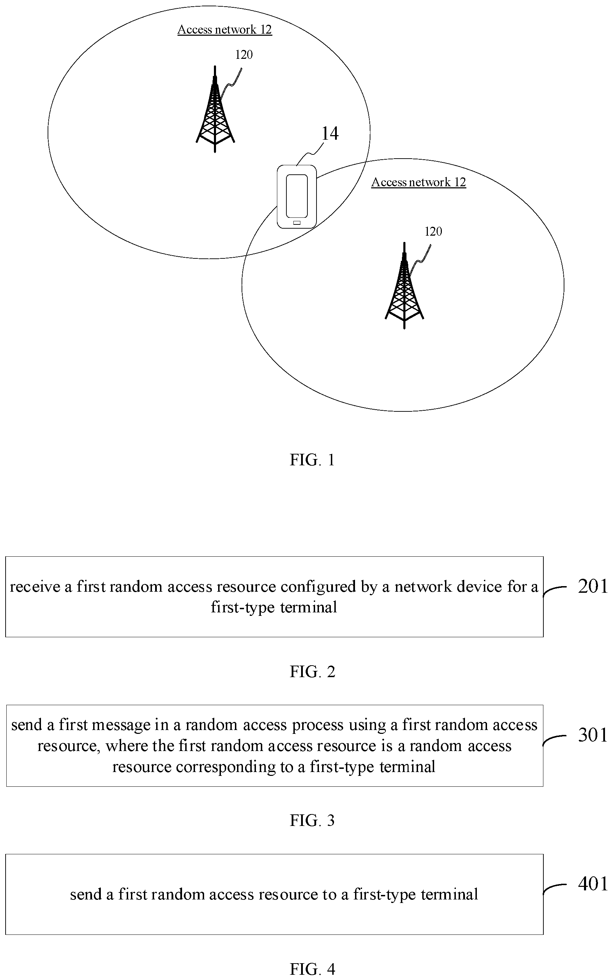

FIG. 1 shows a block diagram of a communication system provided by an illustrative embodiment of the present disclosure. The communication system may include an access network 12 and a user terminal 14.

The access network 12 includes several network devices 120. The network device (also called access network device) 120 can be a base station, which is a device deployed in the access network to provide wireless communication functions for user terminals (referred to as "terminals" for short) 14. The base stations can include various forms of macro base stations, micro base stations, relay stations, access points, etc. In systems using different wireless access technologies, the names of device with base station functions may be different. For example, in the LTE systems, it is called eNodeB or eNB; in the 5G NR systems, it is called gNodeB or gNB. With the evolution of communication technology, the description of "base station" may change. For the convenience of description in the embodiments of the present disclosure, the devices that provide wireless communication functions for user terminals 14 are collectively referred to as network devices.

The user terminal 14 may include various handheld devices with wireless communication functions, vehicle-mounted devices, wearable devices, computing devices or other processing devices connected to a wireless modem, as well as various forms of user equipment, mobile stations (MS), terminal devices, etc. For the convenience of description, the above devices are collectively referred to as user terminals. The network device 120 and the user terminal 14 communicate with each other through a certain air interface technology, such as a Uu interface.

For example, there are two communication scenarios between the network device 120 and the user terminal 14: an uplink communication scenario and a downlink communication scenario. The uplink communication refers to sending signals to the network device 120; and the downlink communication refers to sending signals to the user terminal 14.

For example, the user terminal 14 reports its terminal type to the network device 120 during the random access process. The user terminal 14 may be a first-type terminal, a second-type terminal, or a third-type terminal; the first-type terminal, the second-type terminal, and the third-type terminal are three types of terminals corresponding to different terminal capabilities.

The technical solutions of the embodiments of the present disclosure can be applied to various communication systems, such as a Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, New Radio (NR) system, evolution system of the NR system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Network (WLAN), Wireless Fidelity (WiFi), next generation communication system or other communication systems, etc.

Generally, the number of connections supported by traditional communication systems is limited and easy to implement. However, with the development of communication technology, mobile communication systems will not only support traditional communications, but also support, for example, Device to Device (D2D) communication, Machine to Machine (M2M) communication, Machine Type Communication (MTC), Vehicle to Vehicle (V2V) communication, Vehicle to Everything (V2X) system, etc. The embodiments of the present disclosure can also be applied to these communication systems.

FIG. 2 shows a flow chart of a random access resource configuration method provided by an illustrative embodiment of the present disclosure. The method is applied to the communication system shown in FIG1 and is performed by a first-type terminal. The method includes the following steps.

**Step 201,** a first random access resource configured by a network device for a first-type terminal is received.

The first random access resource is different from a second random access resource for a second-type terminal and a third random access resource for a third-type terminal, and a terminal capability of the second-type terminal and a terminal capability of the third-type terminal are greater than a terminal capability of the first-type terminal.

For example, the terminal capability of the second-type terminal is also smaller than the terminal capability of the third-type terminal.

For example, the terminal capability includes a terminal bandwidth, and the terminal bandwidth supported by the first-type terminal is smaller than the terminal bandwidth supported by the second-type terminal and the terminal bandwidth supported by the third-type terminal. The terminal bandwidth of the second-type terminal is also smaller than the terminal bandwidth supported by the third-type terminal. For example, the above terminal bandwidth refers to the maximum transceiving bandwidth supported by the terminal.

Optionally, the first-type terminal is an eRedCap UE, the second-type terminal is a RedCap UE, and the third-type terminal is a non-Reduced Capability terminal (i.e., a normal terminal). The non-Reduced Capability terminal is a terminal defined in a 5G NR system, which includes terminals in the 5G NR system other than the eRedCap UE and the RedCap UE.

The maximum transceiving bandwidth supported by the eRedCap UE is smaller than the maximum transceiving bandwidth supported by the RedCap UE and the maximum transceiving bandwidth supported by RedCap UE; where the non-Reduced Capability terminal is a terminal other than the eRedCap UE and the RedCap UE.

For example, the terminal capability also includes at least one of a peak rate (including uplink peak rate and downlink peak rate), mobility, latency, and supported frequency band of the terminal.

Optionally, the first random access resource is used to indicate a first-type terminal; the second random resource is used to indicate a second-type terminal; and the third random resource is used to indicate a third-type terminal.

Optionally, the first random access resource includes a first uplink initial BandWidth Part (BWP) configured for the first-type terminal, a first Physical Random Access Channel (PRACH) resource, and a first random access preamble.

Alternatively, the first random access resource includes a first PRACH resource and a first random access preamble.

For example, the first PRACH resource is the same as or different from a second PRACH resource, and the second PRACH resource is a PRACH resource configured by the network device for the second-type terminal; the first PRACH resource is the same as or different from a third PRACH resource, and the third PRACH resource is the PRACH configured by the network device for the third-type terminal.

For example, the first random access preamble is different from a second random access preamble and a third random access preamble, and the second random access preamble is also different from the third random access preamble, where the second random access preamble is a random access preamble configured by the network device for the second-type terminal, and the third random access preamble is a random access preamble configured by the network device for the third-type terminal. For example, the first random preamble is used to indicate the first-type terminal, the second random preamble is used to indicate the second-type terminal, and the third random access preamble is used to indicate the third-type terminal.

Optionally, the first PRACH resource includes at least two PRACH time-frequency resources; the first random access preamble includes at least two first random access preambles, that is, the first random access resource includes at least two first random access preambles. For example, the at least two first random access preambles are different random access preambles.

Optionally, in the case that the first random access resource includes the first uplink initial BWP, the first uplink initial BWP includes at least two first PRACH resources, and each of the first PRACH resources is used to carry the transmission of the at least two first random access preambles.

In summary, in the random access resource configuration method provided in this embodiment, the network device configures the first random access resource for the first-type terminal, and the first random access resource is different from the second random access resource used by the second-type terminal and the third random access resource used by the third-type terminal. The terminal capability of the first-type terminal is different from the terminal capability of the second-type terminal and the terminal capability of the third-type terminal. That is, the network device can configure an exclusive first random access resource for the first-type terminal based on the terminal capability of the first-type terminal, and the first-type terminal can be indicated through the use of the first random access resource, thereby supporting the terminal type reporting by the first-type terminal.

After receiving the first random access resource, the first-type terminal uses the first random access resource to perform random access. FIG. 3 shows a flowchart of a random access method provided by an illustrative embodiment of the present disclosure. The method is applied to the communication system shown in FIG. 1 and is performed by the first-type terminal after receiving the first random access resource. The method includes the following steps.

**Step 301,** a first message in a random access process is sent by using a first random access resource, where the first random access resource is a random access resource corresponding to a first-type terminal.

In some embodiments, in the case that the first random access resource includes a first uplink initial BWP, a first PRACH resource and a first random access preamble, the first-type terminal maps the first PRACH resource on the first uplink initial BWP and transmits the first random access preamble on the first PRACH resource.

For example, the first-type terminal maps at least two first PRACH resources on the first uplink initial BWP, and transmits at least two first random access preambles on each of the first PRACH resources.

In some other embodiments, in the case that the first random access resource includes a first PRACH resource and a first random access preamble, that is, in the case that a first uplink initial BWP for the first-type terminal is not configured by the network device, if the network device configures a second uplink initial BWP for a second-type terminal, and the terminal capability of the first-type terminal supports the second uplink initial BWP, the first PRACH resource is mapped on the second uplink initial BWP, and the first random access preamble is sent on the first PRACH resource.

Optionally, in the case that the network device configures the second uplink initial BWP for the second-type terminal and the terminal capability of the first-type terminal supports the second uplink initial BWP, the first-type terminal maps the first PRACH resource on the second uplink initial BWP in response to that the network device does not configure the first uplink initial BWP for the first-type terminal.

That is, in the case that the network device does not configure the first uplink initial BWP for the first-type terminal, the network device configures the second uplink initial BWP for the second-type terminal, and the terminal capability of the first-type terminal supports the second uplink initial BWP, the first PRACH resource is mapped on the second uplink initial BWP.

For example, in the case that the network device does not configure the first uplink initial BWP for the first-type terminal, the network device configures the second uplink initial BWP for the second-type terminal, and the maximum transceiving bandwidth of the first-type terminal is greater than or equal to the second uplink initial BWP, the first-type terminal maps the first PRACH resource on the second uplink initial BWP, and sends the first random access preamble on the first PRACH resource.

For example, the first-type terminal maps at least two first PRACH resources on the second uplink initial BWP, and transmits at least two first random access preambles on each first PRACH resource.

Optionally, the first PRACH resource is the same as or different from a second PRACH resource, and the second PRACH resource is a PRACH resource configured by the network device for the second-type terminal.

Optionally, the first random access preamble is different from a second random access preamble, and the second random access preamble is a random access preamble configured by the network device for the second-type terminal.

In some other embodiments, in the case that the first random access resource includes a first PRACH resource and a first random access preamble, if the network device configures a third uplink initial BWP for a third-type terminal, and the terminal capability of the first-type terminal supports the third uplink initial BWP, the first PRACH resource is mapped on the third uplink initial BWP, and the first random access preamble is sent on the first PRACH resource.

Optionally, in the case that the network device configures the third uplink initial BWP for the third-type terminal and the terminal capability of the first-type terminal supports the third uplink initial BWP, the first-type terminal maps the first PRACH resource on the third uplink initial BWP in response to that the network device does not configure the first uplink initial BWP for the first-type terminal and the second uplink initial BWP for the second-type terminal.

That is, in the case that the network device does not configure the first uplink initial BWP for the first-type terminal and the second uplink initial BWP for the second-type terminal and configures the third uplink initial BWP for the third-type terminal, and the terminal capability of the first-type terminal supports the third uplink initial BWP, the first PRACH resource is mapped on the third uplink initial BWP.

The terminal capability of the first-type terminal supporting the third uplink initial BWP includes that the maximum transceiving bandwidth of the first-type terminal is greater than or equal to the second uplink initial BWP.

For example, the first-type terminal maps at least two first PRACH resources on the third uplink initial BWP, and transmits at least two first random access preambles on each first PRACH resource.

Optionally, the first PRACH resource is the same as or different from a third PRACH resource, and the third PRACH resource is a PRACH resource configured by the network device for the third-type terminal. The first PRACH resource is the same as or different from a second PRACH resource, and the second PRACH resource is a PRACH resource configured by the network device for the second-type terminal.

Optionally, the first random access preamble is different from a third random access preamble, and the third random access preamble is a random access preamble configured by the network device for the third-type terminal. The first random access preamble is different from a second random access preamble, and the second random access preamble is a random access preamble configured by the network device for the second-type terminal.

For example, in a 2-step random access process, the first message includes Message A, and in a 4-step random access process, the first message includes Message 1.

In summary, in the random access method provided in this embodiment, the first-type terminal sends the first message by using the exclusive first random access resource, the first random access resource is different from the second random access resource used by the second-type terminal and the third random access resource used by the third-type terminal, and the terminal capability of the first-type terminal is different from the terminal capability of the second-type terminal and the terminal capability of the third-type terminal. That is, the first-type terminal can use the first random access resource exclusive to the first-type terminal according to the terminal capability of the first-type terminal, and indicate the first-type terminal by sending the first message using the first random access resource, thereby supporting the terminal type reporting by the first-type terminal.

FIG. 4 shows a flow chart of a random access resource configuration method provided by an illustrative embodiment of the present disclosure. The method is applied to the communication system shown in FIG. 1 and is performed by a network device. The method includes the following steps.

**Step 401,** a first random access resource is sent to a first-type terminal.

The first random access resource is different from a second random access resource for a second-type terminal and a third random access resource for a third-type terminal, and the terminal capability of the second-type terminal and the terminal capability of the third-type terminal are both greater than the terminal capability of the first-type terminal. For example, the terminal capability of the second-type terminal is also less than the terminal capability of the third-type terminal.

The network device configures different random access resources for different types of terminals; for example, configuring a first random access resource for a first-type terminal, a second random access resource for a second-type terminal, and a third random access resource for a third-type terminal.

For example, the terminal capability includes terminal bandwidth, and the terminal bandwidth supported by the first-type terminal is smaller than the terminal bandwidth supported by the second-type terminal and the terminal bandwidth supported by the third-type terminal. The terminal bandwidth of the second-type terminal is also smaller than the terminal bandwidth supported by the third-type terminal. For example, the terminal bandwidth refers to the maximum transceiving bandwidth supported by the terminal.

Optionally, the first-type terminal is an eRedCap UE, the second-type terminal is a RedCap UE, and the third-type terminal is a non-Reduced Capability terminal. The non-Reduced Capability terminal is a terminal defined in a 5G NR system, which includes terminals in the 5G NR system other than eRedCap UE and RedCap UE.

The maximum transceiving bandwidth supported by the eRedCap UE is smaller than the maximum transceiving bandwidth supported by RedCap UE and the maximum transceiving bandwidth supported by RedCap UE, where the non-Reduced Capability terminal is a terminal other than eRedCap UE and RedCap UE.

For example, the terminal capability also includes at least one of a peak rate (including an uplink peak rate and a downlink peak rate), mobility, latency, and supported frequency band of the terminal.

Optionally, the first random access resource is used to indicate the first-type terminal; the second random resource is used to indicate the second-type terminal; and the third random resource is used to indicate the third-type terminal.

In some embodiments, the first random access resource includes: a first uplink initial BWP configured for the first-type terminal, a first PRACH resource, and a first random access preamble.

In some other embodiments, the first random access resource includes: a first PRACH resource and a first random access preamble.

Optionally, the network device configures a second uplink initial BWP for the second-type terminal when not configuring the first uplink initial BWP for the first-type terminal; or configures a third uplink initial BWP for the third-type terminal when not configuring the first uplink initial BWP for the first-type terminal.

That is, the network device can also configure the first-type terminal to use the second uplink initial BWP or the third uplink initial BWP. For example, when the network device configures the first random access resource for the first-type terminal, it also configures the second uplink initial BWP for the first-type terminal and the second-type terminal, or it also configures the third uplink initial BWP for the first-type terminal and the third-type terminal.

For example, the second uplink initial BWP configured by the network device for the first-type terminal matches the terminal capability of the first-type terminal; or, the third uplink initial BWP configured by the network device for the first-type terminal matches the terminal capability of the first-type terminal. That is, the maximum transceiving bandwidth supported by the first-type terminal is greater than or equal to the second uplink initial BWP; or, the maximum transceiving bandwidth supported by the first-type terminal is greater than or equal to the third uplink initial BWP.

In the above two configuration modes of the first random access resource, the first PRACH resource is the same as or different from a second PRACH resource, and the second PRACH resource is the PRACH resource configured by the network device for the second-type terminal. The first PRACH resource is the same as or different from a third PRACH resource, and the third PRACH resource is the PRACH resource configured by the network device for the third-type terminal.

The first random access preamble is different from a second random access preamble, and the second random access preamble is a random access preamble configured by the network device for the second-type terminal. The first random access preamble is different from a third random access preamble, and the third random access preamble is a random access preamble configured by the network device for the third-type terminal.

Optionally, the first PRACH resource includes at least two PRACH time-frequency resources. The first random access preamble includes at least two first random access preambles. For example, the network device configures the first random preamble to be used to indicate the first-type terminal, the second random preamble to be used to indicate the second-type terminal, and the third random access preamble to be used to indicate the third-type terminal.

In the case where the first random access resource includes the first uplink initial BWP, the first uplink initial BWP includes at least two first PRACH resources, and each first PRACH resource is used to carry the transmission of at least two first random access preambles.

In summary, in the random access resource configuration method provided in this embodiment, the network device configures the first random access resource for the first-type terminal, the first random access resource is different from the second random access resource used by the second-type terminal and the third random access resource used by the third-type terminal, and the terminal capability of the first-type terminal is different from the terminal capability of the second-type terminal and the terminal capability of the third-type terminal. That is, the network device can configure an exclusive first random access resource for the first-type terminal based on the terminal capability of the first-type terminal, and the first-type terminal can be indicated through the use of the first random access resource, thereby supporting the terminal type reporting by the first-type terminal.

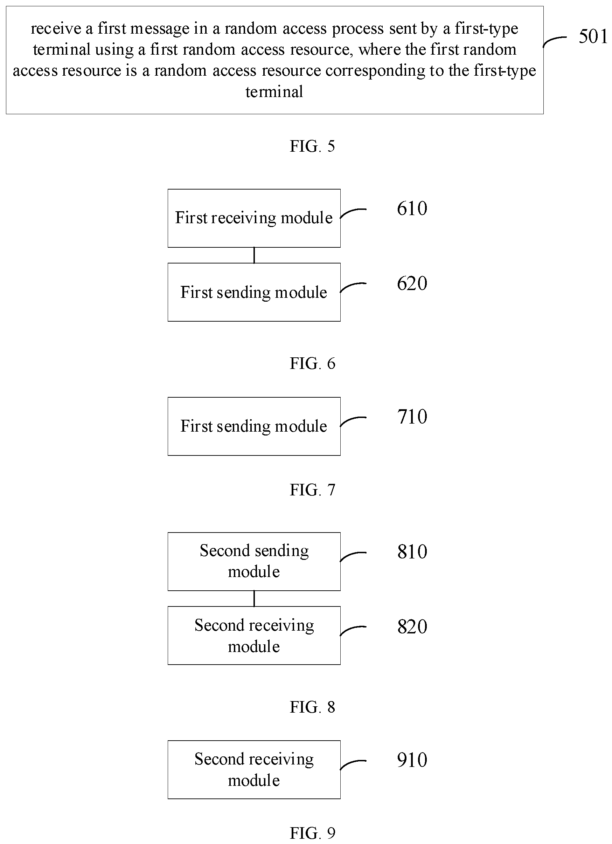

FIG. 5 shows a flowchart of a random access method provided by an illustrative embodiment of the present disclosure. The method is applied to the communication system shown in FIG. 1 and is performed by a network device after configuring a first random access resource for a first-type terminal. The method includes the following steps.

**Step 501,** a first message in a random access process sent by a first-type terminal using a first random access resource is received, where the first random access resource is a random access resource corresponding to the first-type terminal.

The first random access resource is different from a second random access resource for a second-type terminal and a third random access resource for a third-type terminal, and the terminal capability of the second-type terminal and the terminal capability of the third-type terminal are greater than he terminal capability of the first-type terminal.

The network device receives the first message in the random access process sent by the first-type terminal on the first PRACH resource mapped on the first uplink initial BWP; or receives the first message in the random access process sent by the first-type terminal on the first PRACH resource mapped on the second uplink initial BWP; or receives the first message in the random access process sent by the first-type terminal on the first PRACH resource mapped on the third uplink initial BWP. The first message carries a first random access preamble. For example, the first random access preamble includes at least two first random access preambles.

For example, in a 2-step random access process, the first message includes Message A, and in a 4-step random access process, the first message includes Message 1.

In summary, in the random access method provided in this embodiment, the first-type terminal sends the first message using an exclusive first random access resource, the first random access resource is different from the second-type terminal and the third-type terminal, and the terminal capability of the first-type terminal is different from the terminal capability of the second-type terminal and the terminal capability of the third-type terminal. That is, the first-type terminal can use the first random access resource exclusive to the first-type terminal according to the terminal capabilities of the first-type terminal, and thus the network device can determine that the terminal sending the first message using the first random access resource is the first-type terminal, thereby supporting the terminal type reporting by the first-type terminal.

For example, the first-type terminal is defined as an eRedCap UE in the 5G NR system, the second-type terminal is defined as a RedCap UE in the 5G NR system, and the third-type terminal is defined as a normal terminal in the 5G NR system.

The above random access resource configuration method may include the following steps.

Step (1), a network device is allowed to configure a separate first random access resource for an eRedCap UE, where the first random access resource is different from a third random access resource for a normal terminal and a second random access resource for a RedCap UE.

Step (2), based on step (1), the first random access resource includes a first initial UL BWP (i.e., a first uplink initial BWP), at least two different first PRACH time-frequency resources, and at least two different first random access preambles. The first initial UL BWP may include at least two first PRACH resources, each of which may carry the transmission of at least two first random access preambles, and the first PRACH resource includes a first PRACH time-frequency resource.

Step (3), based on step (2), when the network device does not configure the separate first initial UL BWP for the eRedCap UE, and the second initial UL BWP configured for the RedCap UE is within a terminal capability range of the eRedCap UE, the eRedCap UE maps the first PRACH time-frequency resource on the second initial UL BWP and transmits the first random access preamble on the first PRACH time-frequency resource.

Step (4), based on step (3), in response to the first random access preamble of the eRedCap UE being transmitted on the first PRACH time-frequency resource within the second initial UL BWP, the first PRACH time-frequency resource may be the same as a second PRACH time-frequency resource for the RedCap UE, and a second random access preamble used by the RedCap UE is different from the first random access preamble used by the eRedCap UE.

Step (5), based on step (3), when the network device does not configure the separate first initial UL BWP for the eRedCap UE and does not configure a separate second initial UL BWP for the RedCap UE, if the first PRACH time-frequency resource is mapped on a third initial UL BWP configured for a normal terminal, the first random access preamble is transmitted on the first PRACH time-frequency resource.

Step (6), based on step (5), in response to the first random access preamble of the eRedCap UE being transmitted on the first PRACH time-frequency resource within the third initial UL BWP, the first PRACH time-frequency resource of the eRedCap UE may be the same as a second PRACH time-frequency resource of the RedCap UE, and the second random access preamble used by the RedCap UE is different from the first random access preamble used by the eRedCap UE.

Step (7), based on step (6), if no separate second PRACH resource is configured for the RedCap UE, the first PRACH resource of the eRedCap UE may be the same as the third PRACH resource of the normal terminal, and the third random access preamble used by the normal terminal is different from the first random access preamble used by the eRedCap UE.

Step (8), based on step (1), when the network device does not configure the separate first random access resource for the eRedCap UE, the eRedCap UE determines whether the second random access resource allocated to the RedCap UE is within the terminal capability range of the eRedCap UE. If it is within the terminal capability range of the eRedCap UE, the eRedCap UE uses the second random access resource of the RedCap UE. Further, if the network device does not configure the separate first random access resource for the RedCap UE, the eRedCap UE determines whether the third random access resource allocated to the normal terminal is within the terminal capability range of the eRedCap UE. If it is within the terminal capability range of the eRedCap UE, the eRedCap UE uses the third random access resource of the normal terminal. If the eRedCap UE determines that there is no random access resource that can be used by the terminal, the eRedCap UE gives up accessing the network device.

In summary, in the random access resource configuration method provided in this embodiment, the network device configures the first random access resource for the first-type terminal, the first random access resource is different from the second random access resource used by the second-type terminal and the third random access resource used by the third-type terminal, and the terminal capability of the first-type terminal is different from the terminal capability of the second-type terminal and the terminal capability of the third-type terminal. That is, the network device can configure an exclusive first random access resource for the first-type terminal based on the terminal capability of the first-type terminal, and the first-type terminal can be indicated through the use of the first random access resource, thereby supporting the terminal type reporting by the first-type terminal.

FIG. 6 shows a block diagram of a random access resource configuration apparatus provided by an illustrative embodiment of the present disclosure. The apparatus can be implemented as a part or entirety of a first-type terminal through software, hardware, or a combination of both. The apparatus includes:
a first receiving module 610, configured to receive a first random access resource configured by a network device for a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

In some embodiments, the first random access resource includes a first uplink initial bandwidth part (BWP) configured for the first-type terminal, a first physical random access channel (PRACH) resource, and a first random access preamble.

In some embodiments, the apparatus further includes:
a first sending module 620, configured to map the first PRACH resource on the first uplink initial BWP, and send the first random access preamble on the first PRACH resource.

In some embodiments, the first random access resource includes: a first PRACH resource and a first random access preamble.

In some embodiments, the apparatus further comprises:
a first sending module 620, configured to map the first PRACH resource on a second uplink initial BWP and send the first random access preamble on the first PRACH resource in the case that the network device configures the second uplink initial BWP for the second-type terminal and the terminal capability of the first-type terminal supports the second uplink initial BWP.

In some embodiments, the first sending module 620 is configured to map the first PRACH resource on the second uplink initial BWP in response to that the network device does not configure the first uplink initial BWP for the first-type terminal.

In some embodiments, the first sending module 620 is configured to map the first PRACH resource on a third uplink initial BWP and send the first random access preamble on the first PRACH resource in the case that the network device configures the third uplink initial BWP for the third-type terminal and the terminal capability of the first-type terminal supports the third uplink initial BWP.

In some embodiments, the first sending module 620 is configured to map the first PRACH resource on the third uplink initial BWP in response to that the network device does not configure the first uplink initial BWP for the first-type terminal and the second uplink initial BWP for the second-type terminal.

In some embodiments, the first PRACH resource is the same as or different from a third PRACH resource, and the third PRACH resource is a PRACH resource configured by the network device for the third-type terminal.

In some embodiments, the first random access preamble is different from a third random access preamble, and the third random access preamble is a random access preamble configured by the network device for the third-type terminal.

In some embodiments, the first PRACH resource is the same as or different from a second PRACH resource, and the second PRACH resource is a PRACH resource configured by the network device for the second-type terminal.

In some embodiments, the first random access preamble is different from a second random access preamble, and the second random access preamble is a random access preamble configured by the network device for the second-type terminal.

In some embodiments, the first PRACH resource includes at least two PRACH time-frequency resources.

In some embodiments, the first random access preamble includes at least two first random access preambles.

In some embodiments, in the case that the first random access resource includes a first uplink initial BWP, the first uplink initial BWP includes at least two first PRACH resources, and each of the first PRACH resources is used to carry the transmission of the at least two first random access preambles.

In some embodiments, the first-type terminal is an enhanced Reduced Capability UE (eRedCap UE), the second-type terminal is a Reduced Capability UE (RedCap UE), and the third-type terminal is a non-Reduced Capability terminal.

The maximum transceiving bandwidth supported by the eRedCap UE is smaller than the maximum transceiving bandwidth supported by the RedCap UE and the maximum transceiving bandwidth supported by the RedCap UE, where the non-Reduced Capability terminal is a terminal other than the eRedCap UE and the RedCap UE.

FIG. 7 shows a block diagram of a random access apparatus provided by an illustrative embodiment of the present disclosure. The apparatus can be implemented as a part or entirety of a first-type terminal through software, hardware, or a combination of both. The apparatus includes:
a first sending module 710, configured to send a first message in a random access process using a first random access resource, where the first random access resource is a random access resource corresponding to the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

FIG. 8 shows a block diagram of a random access resource configuration apparatus provided by an illustrative embodiment of the present disclosure. The apparatus can be implemented as a part or entirety of a first-type terminal through software, hardware, or a combination of both. The apparatus includes:
a second sending module 810, configured to send a first random access resource to a first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

In some embodiments, the first random access resource includes: a first uplink initial BWP configured for the first-type terminal, a first PRACH resource, and a first random access preamble.

In some embodiments, the apparatus comprises:
a second receiving module 820, configured to receive the first random access preamble sent by the first-type terminal on the first PRACH resource mapped on the first uplink initial BWP.

In some embodiments, the first random access resource includes: a first PRACH resource and a first random access preamble.

In some embodiments, the second sending module 810 is configured to configure a second uplink initial BWP for the second-type terminal in the case that the first uplink initial BWP for the first-type terminal is not configured; or
configure a third uplink initial BWP for the third-type terminal in the case that the first uplink initial BWP for the first-type terminal is not configured.

In some embodiments, the first PRACH resource is the same as or different from a second PRACH resource, and the second PRACH resource is a PRACH resource configured by the network device for the second-type terminal.

In some embodiments, the first PRACH resource is the same as or different from a third PRACH resource, and the third PRACH resource is a PRACH resource configured by the network device for the third-type terminal.

In some embodiments, the first random access preamble is different from a second random access preamble, and the second random access preamble is a random access preamble configured by the network device for the second-type terminal.

In some embodiments, the first random access preamble is different from a third random access preamble, and the third random access preamble is a random access preamble configured by the network device for the third-type terminal.

In some embodiments, the first PRACH resource includes at least two PRACH time-frequency resources.

In some embodiments, the first random access preamble includes at least two first random access preambles.

In some embodiments, in the case that the first random access resource includes a first uplink initial BWP, the first uplink initial BWP includes at least two first PRACH resources, and each of the first PRACH resources is used to carry the transmission of the at least two first random access preambles.

In some embodiments, the first-type terminal is eRedCap UE, the second-type terminal is RedCap UE, and the third-type terminal is a non-Reduced Capability terminal;
the maximum transceiving bandwidth supported by the eRedCap UE is smaller than the maximum transceiving bandwidth supported by the RedCap UE and the maximum transceiving bandwidth supported by the RedCap UE, where the non-Reduced Capability terminal is a terminal other than the eRedCap UE and the RedCap UE.

FIG. 9 shows a block diagram of a random access apparatus provided by an illustrative embodiment of the present disclosure. The apparatus can be implemented as a part or entirety of a first-type terminal through software, hardware, or a combination of both. The apparatus includes:
a second receiving module 910, configured to receive a first message in a random access process sent by a first-type terminal using a first random access resource, where the first random access resource is a random access resource corresponding to the first-type terminal;
where the first random access resource is different from a second random access resource for a second-type terminal and a third random access resource for a third-type terminal, and a terminal capability of the second-type terminal and a terminal capability of the third-type terminal are greater than a terminal capability of the first-type terminal.

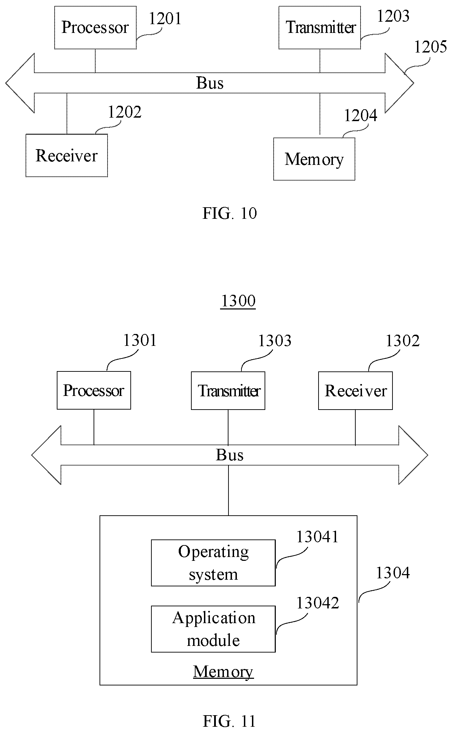

FIG. 10 shows a schematic structural diagram of a UE provided by an illustrative embodiment of the present disclosure. The UE includes: a processor 1201, a receiver 1202, a transmitter 1203, a memory 1204 and a bus 1205.

The processor 1201 includes one or more processing cores. The processor 1201 executes various functional applications and information processing by running software programs and modules.

The receiver 1202 and the transmitter 1203 may be implemented as a communication component, which may be a communication chip.

The memory 1204 is connected to the processor 1201 via a bus 1205.

The memory 1204 may be configured to store at least one instruction, and the processor 1201 may be configured to execute the at least one instruction to implement the steps in the above method embodiments.

In addition, the memory 1204 can be implemented by any type of volatile or non-volatile storage device or a combination thereof. The volatile or non-volatile storage device includes but is not limited to: a magnetic disk or an optical disk, an Electrically Erasable Programmable Read Only Memory (EEPROM), an Erasable Programmable Read-Only Memory (EPROM), a Static Random-Access Memory (SRAM), a Read Only Memory (ROM), a magnetic memory, a flash memory, and a Programmable Read Only Memory (PROM).

In an illustrative embodiment, there is also provided a non-transitory computer-readable storage medium including instructions, such as a memory including instructions, and the instructions can be executed by a processor of a UE to complete the above random access resource configuration method. For example, the non-transitory computer-readable storage medium can be a ROM, a Random Access Memory (RAM), a Compact Disc-Read Only Memory (CD-ROM), a magnetic tape, a floppy disk, an optical data storage device, and the like.

A non-transitory computer-readable storage medium. When the instructions in the non-transitory computer storage medium are executed by a processor of a UE, the UE is enabled to perform the above random access resource configuration method.

FIG. 11 is a block diagram showing a network device 1300 according to an illustrative embodiment. The network device 1300 may be a base station.

The network device 1300 may include: a processor 1301, a receiver 1302, a transmitter 1303 and a memory 1304. The receiver 1302, the transmitter 1303 and the memory 1304 are respectively connected to the processor 1301 via a bus.

The processor 1301 includes one or more processing cores, and the processor 1301 performs the random access method provided by the embodiments of the present disclosure by running software programs and modules. The memory 1304 can be configured to store software programs and modules. Specifically, the memory 1304 can store an operating system 13041 and an application module 13042 required for at least one function. The receiver 1302 is configured to receive communication data sent by other devices, and the transmitter 1303 is configured to send communication data to other devices.

An illustrative embodiment of the present disclosure also provides a computer-readable storage medium having stored thereon at least one instruction, at least one program, a code set or an instruction set which is loaded and executed by the processor to implement the steps on the terminal side in the random access resource configuration method and the random access method provided by the above method embodiments, or to implement the steps on the network device side in the random access resource configuration method and the random access method as described in the above aspects.

An illustrative embodiment of the present disclosure also provides a computer program product which includes computer instructions, and the computer instructions are stored in a computer-readable storage medium; a processor of a computer device reads the computer instructions from the computer-readable storage medium, and the processor executes the computer instructions to cause the computer device to perform the steps on the terminal side in the random access resource configuration method and the random access method provided by the above method embodiments, or to perform the steps on the network device side in the random access resource configuration method and the random access method as described in the above aspects.

It should be understood that "a plurality of" mentioned herein refers to two or more. "And/or" describes the association relationship of the associated objects, indicating that there can be three relationships. For example, A and/or B can indicate: A exists alone, A and B exist at the same time, and B exists alone. The character "/" generally indicates that the associated objects before and after this character are in an "or" relationship.

It can be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first message frame can also be referred to as the second message frame, and similarly, the second message frame can also be referred to as the first message frame.

It can be further understood that although operations are described in a specific order in the drawings in the embodiments of the present disclosure, it should not be interpreted as requiring that these operations be performed in the specific order shown or in a serial order, or requiring that all the operations shown be performed.

Those skilled in the art will readily appreciate other embodiments of the present disclosure after considering the specification and practicing the disclosure disclosed herein. The present disclosure is intended to cover any variations, uses, or adaptations of the present disclosure that follow the general principles of the present disclosure and include common knowledge or conventional technical measures in the art that are not disclosed in the present disclosure. The description and examples are to be considered illustrative only, and the true scope and spirit of the present disclosure are indicated by the following claims.

It should be understood that the present disclosure is not limited to the precise structures that have been described above and shown in the drawings, and that various modifications and changes may be made without departing from the scope thereof. The scope of the present disclosure is limited only by the appended claims.

## Claims

1. A random access resource configuration method, performed by a first-type terminal, the method comprising:
receiving a first random access resource configured by a network device for the first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

2. The method according to claim 1, wherein the first random access resource comprises:
a first uplink initial bandwidth part (BWP) configured for the first-type terminal, a first Physical Random Access Channel (PRACH) resource, and a first random access preamble.

3. The method according to claim 2, wherein the method further comprises:
mapping the first PRACH resource on the first uplink initial BWP, and sending the first random access preamble on the first PRACH resource.

4. The method according to claim 1, wherein the first random access resource comprises:
a first PRACH resource and a first random access preamble.

5. The method according to claim 4, wherein the method further comprises:
in a case that a second uplink initial BWP is configured for the second-type terminal by the network device and the terminal capability of the first-type terminal supports the second uplink initial BWP, mapping the first PRACH resource on the second uplink initial BWP, and sending the first random access preamble on the first PRACH resource.

6. The method according to claim 5, wherein the mapping the first PRACH resource on the second uplink initial BWP comprises:
in response to that the first uplink initial BWP for the first-type terminal is not configured by the network device, mapping the first PRACH resource on the second uplink initial BWP.

7. The method according to claim 4, wherein the method further comprises:
in a case that a third uplink initial BWP is configured for the third-type terminal by the network device and the terminal capability of the first-type terminal supports the third uplink initial BWP, mapping the first PRACH resource on the third uplink initial BWP, and sending the first random access preamble on the first PRACH resource.

8. The method according to claim 7, wherein the mapping the first PRACH resource on the third uplink initial BWP comprises:
in response to that a first uplink initial BWP for the first-type terminals and a second uplink initial BWP for the second-type terminals are not configured by the network device, mapping the first PRACH resource on the third uplink initial BWP.

9. The method according to claim 7, wherein,
the first PRACH resource is the same as or different from a third PRACH resource, and the third PRACH resource is a PRACH resource configured by the network device for the third-type terminal.

10. The method according to claim 7, wherein,
the first random access preamble is different from a third random access preamble, and the third random access preamble is a random access preamble configured by the network device for the third-type terminal.

11. The method according to any one of claims 5 to 10, wherein,
the first PRACH resource is the same as or different from a second PRACH resource, and the second PRACH resource is a PRACH resource configured by the network device for the second-type terminal.

12. The method according to any one of claims 5 to 10, wherein,
the first random access preamble is different from a second random access preamble, and the second random access preamble is a random access preamble configured by the network device for the second-type terminal.

13. The method according to any one of claims 2 to 10, wherein the first PRACH resource comprises at least two PRACH time-frequency resources.

14. The method according to any one of claims 2 to 10, wherein the first random access preamble comprises at least two first random access preambles.

15. The method according to claim 14, wherein in a case that the first random access resource comprises a first uplink initial BWP, the first uplink initial BWP comprises at least two first PRACH resources, and each of the first PRACH resources is used to carry transmission of the at least two first random access preambles.

16. The method according to any one of claims 1 to 10, wherein the first-type terminal is an enhanced Reduced Capability UE (eRedCap UE), the second-type terminal is a Reduced Capability UE (RedCap UE), and the third-type terminal is a non-Reduced Capability terminal;
wherein a maximum transceiving bandwidth supported by the eRedCap UE is smaller than the maximum transceiving bandwidth supported by the RedCap UE and the maximum transceiving bandwidth supported by the RedCap UE, and the non-Reduced Capability terminal is a terminal other than the eRedCap UE and the RedCap UE.

17. A random access method, performed by a first-type terminal, the method comprising:
sending a first message in a random access process using a first random access resource, wherein the first random access resource is a random access resource corresponding to the first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

18. A random access resource configuration method, performed by a network device, the method comprising:
sending a first random access resource to a first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

19. The method according to claim 18, wherein the first random access resource comprises: a first uplink initial BWP configured for the first-type terminal, a first PRACH resource, and a first random access preamble.

20. The method according to claim 19, wherein the method further comprises:
receiving a first random access preamble sent by the first-type terminal on the first PRACH resource mapped on the first uplink initial BWP.

21. The method according to claim 18, wherein the first random access resource comprises:
a first PRACH resource, and a first random access preamble.

22. The method according to claim 21, wherein the method further comprises:
in a case that a first uplink initial BWP for the first-type terminal is not configured, configuring a second uplink initial BWP for the second-type terminal; or
in a case that the first uplink initial BWP for the first-type terminal is not configured, configuring a third uplink initial BWP for the third-type terminal.

23. The method according to claim 22, wherein the first PRACH resource is the same as or different from a second PRACH resource, and the second PRACH resource is a PRACH resource configured by the network device for the second-type terminal.

24. The method according to claim 23, wherein the first PRACH resource is the same as or different from a third PRACH resource, and the third PRACH resource is a PRACH resource configured by the network device for the third-type terminal.

25. The method according to claim 22, wherein the first random access preamble is different from a second random access preamble, and the second random access preamble is a random access preamble configured by the network device for the second-type terminal.

26. The method according to claim 25, wherein the first random access preamble is different from a third random access preamble, and the third random access preamble is a random access preamble configured by the network device for the third-type terminal.

27. The method according to any one of claims 19 to 26, wherein the first PRACH resource comprises at least two PRACH time-frequency resources.

28. The method according to any one of claims 19 to 26, wherein the first random access preamble comprises at least two first random access preambles.

29. The method according to claim 28, wherein in a case that the first random access resource comprises a first uplink initial BWP, the first uplink initial BWP comprises at least two first PRACH resources, and each of the first PRACH resources is used to carry transmission of the at least two first random access preambles.

30. The method according to any one of claims 18 to 26, wherein the first-type terminal is an eRedCap UE, the second-type terminal is a RedCap UE, and the third-type terminal is a non-Reduced Capability terminal;
wherein a maximum transceiving bandwidth supported by the eRedCap UE is smaller than the maximum transceiving bandwidth supported by the RedCap UE and the maximum transceiving bandwidth supported by the RedCap UE, and the non-Reduced Capability terminal is a terminal other than the eRedCap UE and the RedCap UE.

31. A random access method, performed by a network device, the method comprising:
receiving a first message in a random access process sent by a first-type terminal using a first random access resource, wherein the first random access resource is a random access resource corresponding to the first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

32. A random access resource configuration apparatus, comprising:
a first receiving module, configured to receive a first random access resource configured by a network device for a first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

33. A random access apparatus, comprising:
a first sending module, configured to send a first message in a random access process using a first random access resource, wherein the first random access resource is a random access resource corresponding to a first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

34. A random access resource configuration apparatus, comprising:
a second sending module, configured to send a first random access resource to a first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

35. A random access apparatus, comprising:
a second receiving module, configured to receive a first message in a random access process sent by a first-type terminal using a first random access resource, wherein the first random access resource is a random access resource corresponding to the first-type terminal;
wherein the first random access resource is different from a second random access resource for a second-type terminal and a third random access resource for a third-type terminal, and a terminal capability of the second-type terminal and a terminal capability of the third-type terminal are greater than a terminal capability of the first-type terminal.

36. A terminal, comprising:
a processor; and
a transceiver connected to the processor;
wherein the processor is configured to execute executable instructions to implement the random access resource configuration method according to any one of claims 1 to 16, and the random access method according to claim 17.

37. A network device, comprising:
a processor; and
a transceiver connected to the processor;
wherein the processor is configured to execute executable instructions to implement the random access resource configuration method according to any one of claims 18 to 30, and the random access method according to claim 31.

38. A computer-readable storage medium, having stored therein at least one piece of instructions, at least one program segment, a code set or an instruction set which is loaded and executed by a processor to implement the random access resource configuration method according to any one of claims 1 to 16 and the random access method according to claim 17, or the random access resource configuration method according to any one of claims 18 to 30 and the random access method according to claim 31.
